# EUROPÄISCHE PATENTANMELDUNG

(11) **EP 4 331 762 A1**
(43) Veröffentlichungstag der Anmeldung: **06.03.2024**
(21) Anmeldenummer: 22192596.9
(22) Anmeldetag: 29.08.2022
(51) Int. Cl.: B23D 51/16, B23Q 11/00

(54) **WERKZEUGMASCHINE MIT EINEM ROTIERENDEN WERKZEUG UND VERFAHREN ZUM BREMSEN EINES ROTIERENDEN WERKZEUGS**

(71) Anmelder: Hilti Aktiengesellschaft, 9494 Schaan (LI)
(72) Erfinder: Lacher, Michael, 86830 Schwabmünchen (DE)
(74) Vertreter: Hilti Aktiengesellschaft Corporate Intellectual Property

(57) **Zusammenfassung**

Werkzeugmaschine (10) mit einem rotierenden Werkzeug (20), wobei die Werkzeugmaschine zur Unterstützung eines konventionellen Bremsvorgangs eine Wirbelstrombremse (2) aufweist, wobei die Wirbelstrombremse ein Mittel (14) zur Erzeugung eines magnetischen Felds (16) umfasst und das rotierende Werkzeug einen Metall-Bestandteil (22), so dass das rotierende Werkzeug bei Bewegung durch das magnetische Feld abgebremst wird. Verfahren zum Bremsen eines rotierenden Werkzeugs einer Werkzeugmaschine, bei dem eine Wirbelstrombremse als Ergänzung eines konventionellen Bremsvorgangs zugeschaltet werden kann. Die Werkzeugmaschine kann ein besonders effektives und schnelles Abbremsen des rotierenden Werkzeugs ermöglichen, da überschüssige, beim Bremsen im Rahmen des konventionellen Bremsvorgangs Energie nicht in Wärmeenergie umgewandelt, sondern zur Erzeugung eines Magnetfelds verwendet wird, mit dem das rotierende Werkzeug weiter abgebremst werden kann.

## Beschreibung

Die Erfindung betrifft eine Werkzeugmaschine mit einem rotierenden Werkzeug, wobei die Werkzeugmaschine zur Unterstützung eines konventionellen Bremsvorgangs eine Wirbelstrombremse aufweist, wobei die Wirbelstrombremse ein Mittel zur Erzeugung eines magnetischen Felds umfasst und das rotierende Werkzeug einen Metall-Bestandteil, so dass das rotierende Werkzeug bei Bewegung durch das magnetische Feld abgebremst wird. In einem zweiten Aspekt betrifft die Erfindung ein Verfahren zum Bremsen eines rotierenden Werkzeugs einer Werkzeugmaschine, bei dem eine Wirbelstrombremse als Ergänzung eines konventionellen Bremsvorgangs zugeschaltet werden kann. Mit der Erfindung kann ein besonders effektives und schnelles Abbremsen des rotierenden Werkzeugs ermöglicht werden, da überschüssige, beim Bremsen im Rahmen des konventionellen Bremsvorgangs Energie nicht in Wärmeenergie umgewandelt, sondern zur Erzeugung eines Magnetfelds verwendet wird, mit dem das rotierende Werkzeug der Werkzeugmaschine weiter abgebremst werden kann.

### Hintergrund der Erfindung:

Im Stand der Technik sind Werkzeugmaschinen bekannt, die als Werkzeuge rotierende Werkzeuge aufweisen. Beispielsweise sind Werkzeugmaschinen, wie Schleif- oder Trenngeräte bekannt, die scheibenförmige Werkzeuge, wie Schleif- oder Trennscheiben aufweisen. Darüber hinaus sind Werkzeugmaschinen, wie Bohrmaschinen oder Bohrhämmer bekannt, die als Werkzeuge bohrerartige, d.h. Bohr-Werkzeuge aufweisen. Des Weiteren sind Werkzeugmaschinen, wie Kernbohrgerät bekannt, die als Werkzeug mit einer Bohrkrone verbunden werden können und die dazu geeignet sind, im Wesentlichen zylinderförmige Bohrkerne aus einem Untergrund herauszuschneiden. Die genannten Werkzeuge stellen rotierende Werkzeuge dar, die sich um eine Dreh- oder Rotationsachse drehen können, wobei die Drehachse im Wesentlichen parallel oder senkrecht zu einer Drehachse des Motors der Werkzeugmaschine orientiert vorliegen kann.

Für solche rotierenden Werkzeuge sind im Stand der Technik verschiedene Verfahren bekannt, um ihre Bewegung zu verlangsamen und/oder zu einem Halt zu bringen. Beispielsweise kann das rotierende Werkzeug einer Werkzeugmaschine rein mechanisch abgebremst werden, indem eine Bremsscheibe festgeklemmt wird. Darüber hinaus sind elektronische Bremsverfahren bekannt, wie beispielsweise das sog. "Kurzschlussbremsen", bei dem ein Kurzschluss auf die Motorphasen des Motors der Werkzeugmaschine erzeugt wird, wobei sich der einstellende Strom bremsend auf die Drehbewegung des Motors auswirkt. Des Weiteren ist das sog. "generatorische Bremsen" bekannt, das vorzugsweise auch als "Flussbremse" bezeichnet wird. Dabei kann eine Bestromung des Motors aktiv von einem Motorinverter gesteuert werden, wobei der eingeprägte Strom so eingestellt wird, dass ein großer Anteil der beim Bremsen freiwerdenden Energie in Wärme umgewandelt wird. In einigen Fällen kann beim generatorischen Bremsen Energie zurückgewonnen und in eine Energieversorgungsvorrichtung ("Batterie" oder "Akkumulator") der Werkzeugmaschine zurückgespeist werden, wenn es sich bei der Werkzeugmaschine um eine batteriebetriebene Werkzeugmaschine handelt. Wenn nicht die gesamte beim Bremsen freiwerdende Energie zurückgespeist werden kann oder wenn die Werkzeugmaschine keine wiederaufladbare Energieversorgungsvorrichtung aufweist, kann ein Bremschopper, d.h. ein Bremswiderstand, vorgesehen sein, um die überschüssige Bremsenergie in Wärme umzuwandeln.

Allerdings sind diese im Stand der Technik bekannten Bremsverfahren zum Teil mit den folgenden Nachteilen behaftet: rein mechanische Bremsen sind häufig sehr wartungsintensiv, so dass es zu unerwünschten Stillstandzeiten der Werkzeugmaschine kommen kann. Außerdem ist zu bedenken, dass große mechanischen Massen oft nur langsam gebremst werden können. Die Bremsleistung ist insbesondere beim Kurschlussbremsen abhängig von einer Drehzahl des Motors der Werkzeugmaschine, so dass ein Bremsen auf Stillstand nicht möglich ist.

Während die Bremsleistung beim generatorischen Bremsen häufig abhängig ist von der Stromtragfähigkeit des Motorinverters. Darüber hinaus stellt die Aufnahmefähigkeit einer eventuell vorhandenen wiederaufladbaren Energieversorgungsvorrichtung eine Limitierung bekannter Bremsverfahren aus dem Stand der Technik dar, dies insbesondere dann, wenn nur eine begrenzte Menge an freiwerdender Bremsenergie von der Energieversorgungsvorrichtung aufgenommen werden kann. Bremschopper dahingegen können die Herstellungskosten einer Werkzeugmaschine erhöhen und stellen ein zusätzliches Bauteil innerhalb der Werkzeugmaschine dar. Darüber hinaus können sie einen Steuerungsaufwand innerhalb der Werkzeugmaschine erhöhen.

Aufgabe der vorliegenden Erfindung ist es, die vorstehend beschriebenen Mängel und Nachteile des Standes der Technik zu überwinden und einen, vor allem unter energetischen Gesichtspunkten, optimierten und effizienten Bremsvorgang für das rotierende Werkzeug einer Werkzeugmaschine bereitzustellen. Darüber hinaus soll ein Werkzeug mit einem rotierenden Werkzeug bereitgestellt werden, mit dem das anzugebenden Bremsverfahren durchgeführt werden kann. Die Werkzeugmaschine soll wartungsarm sein und möglichst wenige Bauteile umfassen. Darüber hinaus soll die Werkzeugmaschine kostengünstig in der Herstellung sein. Die Fachwelt würde es insbesondere für batteriebetriebene Werkzeugmaschinen begrüßen, wenn ein möglichst großer Anteil von Energie, der beim Bremsen des Werkzeugs frei wird, nicht in Wärme umgewandelt, sondern erneut für die Nutzung durch die Werkzeugmaschine zur Verfügung gestellt werden könnte.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei in einem ersten Aspekt durch eine Werkzeugmaschine mit einem rotierenden Werkzeug, wobei die die Werkzeugmaschine zur Unterstützung eines konventionellen Bremsvorgangs eine Wirbelstrombremse aufweist, wobei die Wirbelstrombremse ein Mittel zur Erzeugung eines magnetischen Felds umfasst und das rotierende Werkzeug einen MetallBestandteil, so dass das rotierende Werkzeug bei Bewegung durch das magnetische Feld abgebremst wird. Mit der Erfindung kann vorteilhafterweise eine zusätzliche Bremswirkung auf das rotierende Werkzeug der Werkzeugmaschine erzeugt werden, so dass das rotierende Werkzeug besonders schnell abgebremst werden kann. Dabei freiwerdende Energie kann - wie weiter unten detailliert erläutert werden wird - effizient in einer Energieversorgungsvorrichtung, wie eine Batterie oder einen Akkumulator ("Akku"), zurückgespeist werden, so dass sie für eine spätere weitere Verwendung der Werkzeugmaschine erneut zur Verfügung steht. Dadurch kann vorteilhafterweise die Reichweite der Energieversorgungsvorrichtung verlängert werden, so dass die Abstände zwischen Lade-Pausen bei der Arbeit mit der Werkzeugmaschine erfreulicherweise verlängert werden können. Es ist daher im Sinne der Erfindung besonders bevorzugt, dass die Werkzeugmaschine eine akkubetriebene Werkzeugmaschine ist. Die Begriffe "akkubetrieben" und "batteriebetrieben" werden im Sinne der Erfindung bevorzugt synonym verwendet. Es ist im Sinne der Erfindung bevorzugt, dass eine akkubetriebene Werkzeugmaschine eine wiederaufladbare Energieversorgungsvorrichtung aufweist, die entweder in der Werkzeugmaschine selbst oder in einem dafür vorgesehen Ladegerät aufgeladen werden kann. Die Energieversorgungsvorrichtung ist insbesondere dafür vorgesehen, die Werkzeugmaschine mit elektrischer Energie zu versorgen. Die Energieversorgungsvorrichtung kann vorzugsweise auch dafür verwendet werden, rückgespeiste Energie, die beim Bremsvorgang des rotierenden Werkzeugs frei wird, aufzunehmen und/oder zu speichern. Dadurch kann diese freigewordene Bremsenergie für eine spätere Nutzung durch die Werkzeugmaschine verfügbar gemacht bzw. gehalten werden.

In einem besonders bevorzugten Ausführungsbeispiel der Erfindung kann die Werkzeugmaschine ein akkubetriebener Trennschleifer sein, wobei der akkubetriebene Trennschleifer als rotierendes Werkzeug eine Trennscheibe aufweist. Mit der Erfindung kann vorteilhafterweise eine besonders schnelle und effiziente Bremse für die Trennscheibe des akkubetriebenen Trennschleifers realisiert werden. Die überraschende Schnelligkeit des Bremsvorgangs kann einen Beitrag zu einem verbesserten Schutz des Bedieners der Werkzeugmaschine leisten, vor allem in Fällen des sog. Kickbacks, d.h. beim Verhaken der Trennscheibe in dem zu bearbeitenden Untergrund mit anschließendem Herausschleudern des Trennschleifers. Darüber hinaus kann mit der Erfindung die Bedienung des Geräts, insbesondere beim Stoppen der Trennscheibe zum Abstellen der Werkzeugmaschine, erleichtert werden.

Das rotierende Werkzeug fungiert im Rahmen der Erfindung als Wirbelstromläufer, wobei das rotierende Werkzeug durch Wirbelströme, die bedingt durch das Magnetfeld im Inneren des Werkzeugs entstehen, abgebremst wird. Durch die Bewegung des rotierenden Werkzeugs in dem Magnetfeld entstehen vorteilhafterweise Lorentz-Kräfte und Wirbelströme, wodurch das rotierende Werkzeug der Werkzeugmaschine abgebremst wird ("zweite oder zusätzliche Bremswirkung"). Tests haben gezeigt, dass die Verwendung einer Wirbelstrombremse in Kombination mit mindestens einem herkömmlichen Bremsverfahren ein besonders schnelles Abbremsen des rotierenden Werkzeugs der Werkzeugmaschine ermöglicht.

Es ist im Sinne der Erfindung bevorzugt, dass das rotierende Werkzeug als Metall-Bestandteil einen Metall-Kern umfasst. Der Metall-Kern kann vorzugsweise Stahl umfassen oder aus Stahl gebildet sein. Selbstverständlich sind neben Stahl auch anderen Metall-Legierungen möglich, so lange diese Metall-Legierungen dazu geeignet sind, bei Bewegung in einem magnetischen Feld Lorentzkräfte bzw. Wirbelströme zu erzeugen, so dass das rotierende Werkzeug bei Bewegung durch das Magnetfeld gebremst wird. Vorzugsweise weisen die Metall-Legierungen Eisen als wesentlichen Bestandteil auf. Der Metall-Kern kann in einem inneren Bereich des rotierenden Werkzeugs vorliegen und einen integralen Bestandteil des rotierenden Werkzeugs darstellen. Es kann aber im Sinne der Erfindung auch bevorzugt sein, dass der Metall-Bestandteil flach bzw. plattenförmig ausgebildet ist und zusätzlich oder nachträglich auf dem rotierenden Werkzeug angebracht wird, um die Verwendung als Wirbelstromläufer in einer Wirbelstrombremse zu ermöglichen. Der Vorteil der Verwendung einer zusätzlichen Metall-Scheibe als Metall-Bestandteil ist mit dem Vorteil verbunden, dass der Anbringungsort einer solchen Metallscheibe frei wählbar ist. Dadurch kann der Metallbestandteil besonders weit außen an dem rotierenden Werkzeug angebracht werden. Eine Anbringung im äußeren Bereich des rotierenden Werkzeugs ist mit dem Vorteil verbunden, dass dort höhere Geschwindigkeiten auftreten, die zu einer stärkeren Bremswirkung der Wirbelstrombremse führen. Mit anderen Worten ist eine Anbringung eines Metall-Bestandteile möglichst weit außen bzw. in einem äußeren Bereich des rotierenden Werkzeugs bevorzugt, um eine möglichst effiziente Bremswirkung der Wirbelstrombremse zu erreichen. Darüber hinaus können durch die zusätzliche oder nachträgliche Anbringung von Metall-Bestandteilen an das rotierende Werkzeug auch solche rotierenden Werkzeuge für das vorgeschlagene Bremsverfahren verwendbar gemacht werden, die es sonst nicht wären, beispielsweise weil ihr Grundmaterial keine geeigneten magnetischen Eigenschaften aufweist. Dabei kann es sich beispielsweise um nicht-metallische Abrasiv-Trennscheiben handeln, in die ein metallischer Grundkörper als Metall-Bestandteil eingebracht werden kann.

Es ist im Sinne der Erfindung bevorzugt, dass die Mittel zur Erzeugung des magnetischen Felds einen Dauermagneten und/oder einen Elektromagneten umfassen. Beispielsweise kann die Wirbelstrombremse der Werkzeugmaschine einen Dauermagneten umfassen, der als Hufeisenmagnet oder u-förmig ausgebildet ist. Ein solcher Dauermagnet kann beispielsweise beweglich ausgebildet sein und seine bevorzugt gegenüberliegenden Pole können über die Trennscheibe geschoben bzw. bewegt werden. Dadurch kann ein Magnetfeld erzeugt werden, durch das hindurch sich das rotierende Werkzeug bei Betrieb der Werkzeugmaschine bewegt. Vorzugsweise kann durch die Verwendung eines hufeisen-förmigen Magneten als Mittel zur Erzeugung eines Magnetfelds ein Magnetfeld erzeugt werden, dessen Magnetfeldlinien im Wesentlichen parallel zur Dreh- oder Rotationsachse des rotierenden Werkzeugs verlaufen. Auf diese Weise kann das Magnetfeld besonders wirksam auf das rotierende Werkzeug wirken und eine starke Bremswirkung bewirken. Es kann im Sinne der Erfindung auch bevorzugt sein, dass der Dauermagnet in Stufen in die räumliche Nähe des rotierenden Werkzeugs gebracht wird. Auf diese Weise kann das rotierende Werkzeug unterschiedlich tief in dem Hufeisen eingebracht vorliegen. Je tiefer eingebracht das rotierende Werkzeug in dem bevorzugt hufeisenförmig ausgebildeten Dauermagneten vorliegt, desto größer ist das Magnetfeld, das auf das rotierende Werkzeug wirkt und desto stärker ist die erzeugte Bremswirkung bzw. Bremskraft.

Es ist im Sinne der Erfindung bevorzugt, dass das magnetische Feld im Wesentlichen senkrecht zu dem rotierenden Werkzeug ausgebildet ist. Das bedeutet im Sinne der Erfindung bevorzugt, dass das magnetische Feld im Wesentlichen parallel zu einer Achse des rotierenden Werkzeugs ausgebildet ist bzw. dass die magnetischen Feldlinien des Magnetfelds im Wesentlichen parallel und/oder orthogonal zur Achse des rotierenden Werkzeugs ausgebildet sind. Im Falle einer Bohrkrone als Werkzeug der Werkzeugmaschine kann der verwendete Magnet zur Erzeugung des Magnetfelds beispielsweise ein Hufeisenmagnet sein, wobei die Bohrkrone vorzugsweise als Joch über den Enden des Hufeisens verläuft. In diesem Ausführungsbeispiel der Erfindung können die Magnetfeldlinien vorzugsweise im Wesentlichen senkrecht und parallel in der Rotationsebene der Bohrkrone verlaufen.

Es kann im Sinne der Erfindung auch bevorzugt sein, dass die Mittel zur Erzeugung eines magnetischen Feldes von einem Elektromagneten gebildet werden oder einen Elektromagneten umfassen. Die Mittel zur Erzeugung des Magnetfeldes können insbesondere eine stromdurchflossene Spule und ferromagnetischer Spulengrundköper umfassen. Der Elektromagnet kann so in Bezug auf das rotierende Werkzeug montiert werden, dass sich das Magnetfeld im Wesentlichen senkrecht zum rotierenden Werkzeug ausbildet, damit Lorentz-Kräfte und Wirbelströme erzeugt werden. Diese Lorentz-Kräfte und Wirbelströme bewirken vorteilhafterweise das Abbremsen des rotierenden Werkzeugs der Werkzeugmaschine. Durch die Verwendung eines Elektromagneten als Mittel zur Erzeugung eines Magnetfelds kann vorteilhafterweise eine steuerungstechnisch besonders flexible Möglichkeit zur Erzeugung eines magnetischen Feldes geschaffen werden.

Es ist im Sinne der Erfindung bevorzugt, dass der elektrische Strom zur Erzeugung des magnetischen Felds in Abhängigkeit von einer Versorgungspannung der Werkzeugmaschine und/oder unter Verwendung einer Puls-Weiten-Modulation (PWM) geregelt werden kann. Dadurch die die Wirbelstrombremse als Bauteil der Werkzeugmaschine zunächst auch unabhängig von anderen Bremsverfahren für das rotierende Werkzeug der Werkzeugmaschine betreibbar.

Es ist im Sinne der Erfindung bevorzugt, dass die Wirbelstrombremse so ausgebildet ist, dass das magnetische Feld ein- und ausgeschaltet und/oder regelbar eingestellt werden kann. Mit anderen Worten soll das Magnetfeld vorzugsweise in Stufen oder stufenlos einstellbar erzeugt werden können. Beispielsweise kann das magnetische Feld ein- und ausgeschaltet werden, in dem der Stromfluss durch die Spule des Elektromagneten ein- oder ausgeschaltet wird. Eine regelbare Wirbelstrombremse kann beispielsweise dann bereitgestellt werden, wenn auch der Stromfluss durch die Spule des Elektromagneten geregelt, d.h. eingestellt, werden kann. Durch die Verwendung eines Elektromagneten als Mittel zur Erzeugung eines magnetischen Felds kann auf besonders einfache Weise eine vorzugsweise stufenlos einstellbare Wirbelstrombremse bereitgestellt werden. Bei Verwendung eines Dauermagneten als Mittel zur Erzeugung des Magnetfelds kann die Wirbelstrombremse beispielsweise dadurch ein- oder ausgeschaltet werden, dass die Pole des bevorzugt hufeisen-förmig ausgebildeten Dauermagneten jeweils seitlich über das rotierende Werkzeug geschoben werden, so dass sich das rotierende Werkzeug bei Betrieb der Werkzeugmaschine durch das Magnetfeld bewegt, das sich zwischen den Polen des Dauermagneten ausbildet.

Es ist im Sinne der Erfindung bevorzugt, dass die Wirbelstrombremse in einem Antriebsstrang der Werkzeugmaschine angeordnet vorliegt. Im Kontext der vorliegenden Erfindung bezeichnet der Begriff "Antriebsstrang" bevorzugt die Bauteile der Werkzeugmaschine, die die Leistung zum Antrieb des Werkzeugs erzeugen und die diese Leistung auf das Werkzeug übertragen. Es ist im Sinne der Erfindung ganz besonders bevorzugt, dass die Wirbelstrombremse im Bereich einer Achse eines Motors der Werkzeugmaschine, im Bereich einer Achse des rotierenden Werkzeugs der Werkzeugmaschine ("Dreh- oder Rotationsachse") und/oder im Bereich eines Keilriemens der Werkzeugmaschine angeordnet vorliegt. Die Drehachse des Motors der Werkzeugmaschine kann beispielsweise im Wesentlichen parallel oder senkrecht zu der Dreh- oder Rotationsachse des rotierenden Werkzeugs der Werkzeugmaschine verlaufen, je nach Typ der Werkzeugmaschine bzw. des rotierenden Werkzeugs. Der Keilriemen kann vorzugsweise zum Antrieb des rotierenden Werkzeugs verwendet werden. Insbesondere kann eine Drehbewegung des Motors der Werkzeugmaschine mit Hilfe des Keilriemens auf das rotierende Werkzeug der Werkzeugmaschine übertragen werden.

Es ist im Sinne der Erfindung besonders bevorzugt, dass es sich bei der Werkzeugmaschine um ein Schleif- oder Trenngerät handelt. Das rotierende Werkzeug wird dann vorzugsweise von einer Schleif- oder Trennscheibe gebildet, die häufig aus Metall gebildet ist oder Metall umfasst. Auf diese Weise kann der Bremsvorgang für das rotierende Werkzeug der Werkzeugmaschine unter Ausnutzung bereits vorhandener Mittel, wie einem rotierenden Werkzeug mit MetallBestandteil, verbessert bzw. energieeffizienter gestaltet werden. Bei der Werkzeugmaschine kann es sich beispielsweise auch um ein Kernbohrgerät handeln, das als rotierendes Werkzeug eine Bohrkrone umfasst.

In einem zweiten Aspekt betrifft die Erfindung ein Verfahren zum Bremsen eines rotierenden Werkzeugs einer Werkzeugmaschine, wobei die Werkzeugmaschine zur Unterstützung eines konventionellen Bremsvorgangs eine Wirbelstrombremse aufweist, wobei die Wirbelstrombremse ein Mittel zur Erzeugung eines magnetischen Felds umfasst und das rotierende Werkzeug einen Metall-Bestandteil, so dass das rotierende Werkzeug bei Bewegung durch das magnetische Feld abgebremst wird. Das Verfahren ist durch folgenden Verfahrensschritte gekennzeichnet:
a) Bereitstellung einer Werkzeugmaschine mit Wirbelstrombremse,
b) Durchführung eines konventionellen Bremsvorgangs zum Abbremsen des rotierenden Werkzeugs,
c) Hinzuschalten der Wirbelstrombremse zur Ergänzung des konventionellen Bremsvorgangs.

Die für die Werkzeugmaschine beschriebenen Definitionen, technischen Wirkungen und Vorteile gelten für das Bremsverfahren analog. Die Bremswirkung kann insbesondere durch eine Kombination von konventionellen Bremsverfahren, wie beispielsweise dem generatorischen Bremsen des Motors der Werkzeugmaschine, und einer zusätzlichen Wirbelstrombremse, die auf das rotierende Werkzeug der Werkzeugmaschine wirkt, erreicht werden. Der Erfinder hat erkannt, dass durch diese Kombination ein besonders schnelles Abbremsen des Werkzeugs der Werkzeugmaschine ermöglicht werden kann, so dass der Bediener der Werkzeugmaschine durch die Erfindung beispielsweise auch im Falle eines Kickbacks besonders wirksam vor Verletzungen geschützt ist. Darüber hinaus kann mit der Erfindung verhindert werden, dass ein großer Anteil der beim Bremsen freiwerdenden Energie in Wärmeenergie umgewandelt wird. Stattdessen wird ein Teil der Energie, die bei dem konventionellen Bremsvorgang frei wird, dazu verwendet, mittels der Wirbelstrombremse ein Magnetfeld zu erzeugen, welches durch die auftretenden Lorentz-Kräfte und Wirbelströme eine zusätzliche Bremswirkung auf das rotierende Werkzeug bewirkt. Mit anderen Worten kann durch den konventionellen Bremsvorgang eine erste Bremswirkung auf das rotierende Werkzeug der Werkzeugmaschine erzeugt werden und mit der Wirbelstrombremse eine zweite Bremswirkung. Insbesondere die zweite Bremswirkung, die vorzugsweise mit der Wirbelstrombremse erzeugt wird, kann der Gesamt-Bremsvorgang erheblich schneller gestaltet werden, so dass das rotierende Werkzeug der Werkzeugmaschine besonders schnell zum Halten bzw. zu einem Stillstand kommt.

Es ist im Sinne der Erfindung bevorzugt, dass der konventionelle Bremsvorgang ein Rückspeisen von beim Bremsvorgang freiwerdender Energie in eine Energieversorgungsvorrichtung der Werkzeugmaschine umfasst, wobei beim Bremsen des rotierenden Werkzeugs zunächst ein Anteil an Energie in die Energieversorgungsvorrichtung rückgespeist wird und/oder ein Überschuss an freiwerdender Energie verwendet wird, um mittels der Wirbelstrombremse ein magnetisches Feld zu erzeugen und das rotierende Werkzeug der Werkzeugmaschine abzubremsen. Es ist im Sinne der Erfindung ganz besonders bevorzugt, dass beim Bremsen des rotierenden Werkzeugs zunächst ein maximal möglicher Anteil an Energie in die Energieversorgungsvorrichtung rückgespeist wird. Alternativ oder ergänzend kann ein verbleibender Überschuss an freiwerdender Energie verwendet werden, um das magnetische Feld zu erzeugen und das rotierende Werkzeug der Werkzeugmaschine abzubremsen.

Mit anderen Worten ist der konventionelle Bremsvorgang, mit dem vorzugsweise die erste Bremswirkung auf das rotierende Werkzeug bewirkt wird, mit einem Rückspeisen von freiwerdender Energie in die - wenn vorhanden - Energieversorgungsvorrichtung der Werkzeugmaschine verbunden, während ein darüber hinaus verbleibender Energie-Überschuss dazu verwendet werden kann, mit Hilfe der Wirbelstrombremse der Werkzeugmaschine ein Magnetfeld zu erzeugen, mit dem das rotierende Werkzeug der Werkzeugmaschine weiter abgebremst werden kann ("zweite Bremswirkung"). Auf diese Weise kann ein besonders energieeffizientes Bremsverfahren für ein rotierendes Werkzeug einer Werkzeugmaschine bereitgestellt werden, da vermieden wird, dass große Teile der freiwerdenden Energie in Wärme umgewandelt werden und damit für die Nutzung durch die Werkzeugmaschine unbrauchbar werden. Insbesondere kann ein Teil der freiwerdenden Energie zur Erzeugung einer zusätzlichen Bremswirkung verwendet werden, wobei diese zusätzliche, zweite Bremswirkung die Gesamt-Bremswirkung wesentlich verbessert und vor allem ein besonders schnelles Abbremsen des rotierenden Werkzeugs der Werkzeugmaschine ermöglicht. Das Rückspeisen von Energie in eine Energieversorgungsvorrichtung kann im Sinne der Erfindung vorzugsweise auch als "Energierückgewinnung" oder als "Rekuperation" bezeichnet werden.

Es ist im Sinne der Erfindung bevorzugt, dass bei Hinzuschalten der Wirbelstrombremse ein magnetisches Feld erzeugt werden kann, wobei der elektrische Strom zur Erzeugung des magnetischen Felds in Abhängigkeit von einer Versorgungspannung der Werkzeugmaschine und/oder unter Verwendung einer Puls-Weiten-Modulation (PWM) geregelt werden kann.

Es ist im Sinne der Erfindung bevorzugt, dass eine Regelung des Bremsverfahrens strombasiert und/oder drehzahlbasiert erfolgt. Wenn das Bremsverfahren strombasiert geregelt wird ("stromgeregelt"), so handelt es sich bei diesem Strom vorzugsweise um den elektrischen Strom, der im Motor eine Bremswirkung erzeugt, sowie um den Strom, der durch den Elektromagneten der Wirbelstrombremse fließt. Diese beiden Sollwerte werden abhängig vom zulässigen Rekuperationsstrom und dem der benötigten Bremswirkung (Bremszeit) eingestellt.

Wenn das Bremsverfahren drehzahlbasiert geregelt wird ("drehzahlgeregelt"), so handelt es sich bei dieser Drehzahl vorzugsweise um die Drehzahl des Motors der Werkzeugmaschine. Die drehzahlbasierte Regelung des Bremsverfahren kann unter Einbeziehung eines entsprechenden Modells erfolgen.

Durch die Erfindung kann vorteilhafterweise auf die Verwendung eines Bremschoppers als zusätzliches Bauteil der Werkzeugmaschine verzichtet werden. Dadurch kann eine Werkzeugmaschine mit besonders wenigen Teilen bereitgestellt werden, die darüber hinaus besonders wartungsarm, kompakt und robust ausgebildet sein kann. Der Bremsvorgang ist als solcher in Bezug auf die Bremskraft und/oder die Bremszeit steuer- bzw. regelbar. Insbesondere kann ein besonders effektives und schnelles Bremsen des rotierenden Werkzeugs der Werkzeugmaschine ermöglicht werden, da ein Zuviel an generatorischer Bremsenergie nicht in Wärme umgewandelt werden muss, sondern in die Erzeugung einer zusätzlichen Bremskraft "investiert" werden kann. Dadurch kann der erforderliche generatorische Bremsstrom im Motor der Werkzeugmaschine vorteilhafterweise reduziert werden. Die Bremswirkung des vorgeschlagenen Bremsverfahrens wirkt bevorzugt im Wesentlichen direkt auf das rotierende Werkzeug, so dass das Bremsen vorteilhafterweise an dem Ort der größten Rotationsenergie erfolgt. Die Wirbelstrombremse kann auch ohne funktionale Kopplung mit einem konventionellen Bremsverfahren realisiert werden.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:
- Fig. 1: Darstellung eines Ausführungsbeispiels der Wirbelstrombremse
- Fig. 2: schematische Darstellung eines Ausführungsbeispiels des rotierenden Werkzeugs
- Fig. 3: verschiedene Ansichten eines Ausführungsbeispiels einer Werkzeugmaschine mit einem rotierenden Werkzeug

### Ausführungsbeispiele und Figurenbeschreibung:

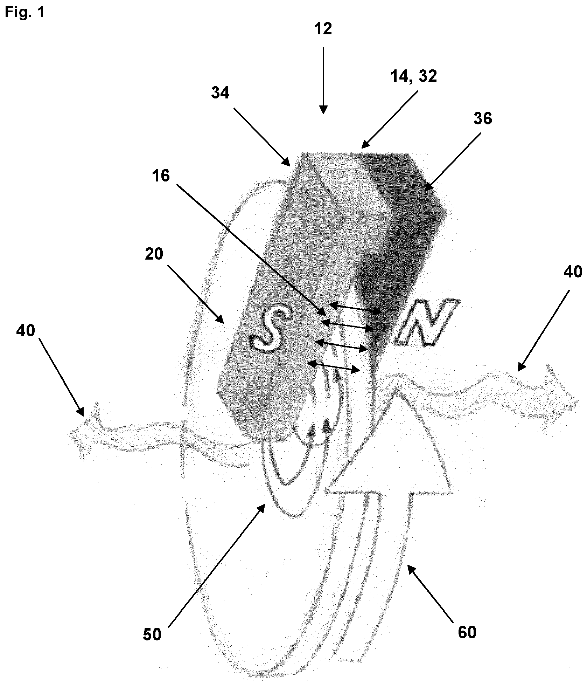

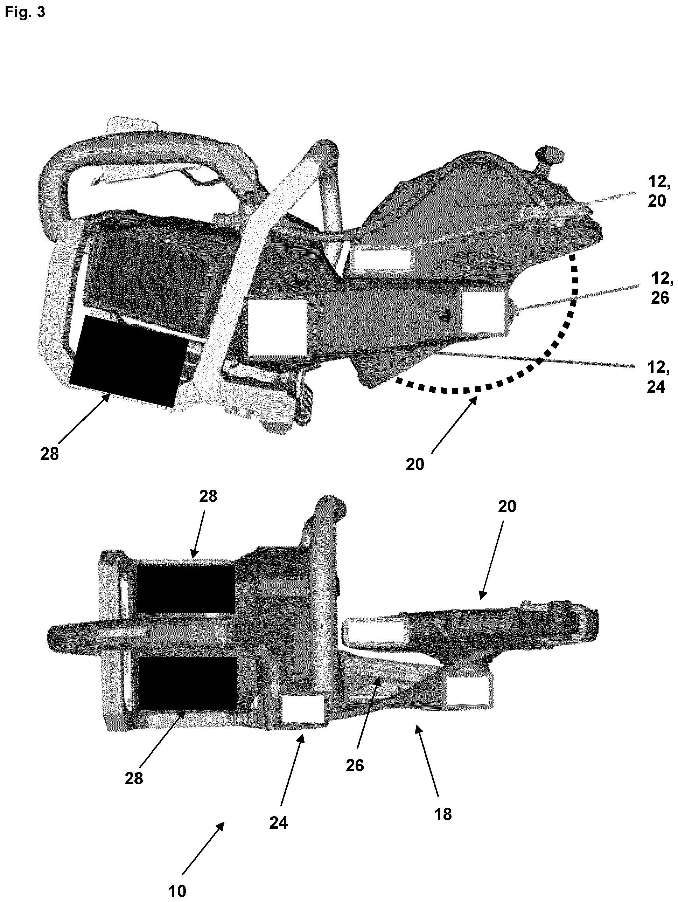

Fig. 1 zeigt eine beispielhafte Ausgestaltung der vorgeschlagenen Wirbelstrombremse 12. Die Wirbelstrombremse 12 kann Bestandteil einer Werkzeugmaschine 10 sein, wie in Figur 3 dargestellt wird. Die Werkzeugmaschine 10 umfasst ein rotierendes Werkzeug 20, das in dem in Figur 1 abgebildeten Ausführungsbeispiel der Erfindung beispielsweise als Trennscheibe ausgebildet ist. Das rotierende Werkzeug 20 führt eine Drehbewegung 60 um eine Dreh- oder Rotationsachse (nicht dargestellt) des rotierenden Werkzeugs 20 aus. Die Wirbelstrombremse 12 umfasst ein Mittel 14 zur Erzeugung eines Magnetfelds 16, wobei das Mittel 14 zur Erzeugung eines Magnetfelds 16 in dem in Figur 1 dargestellten Ausführungsbeispiel der Erfindung als Dauermagnet 32 ausgebildet ist. Der Dauermagnet 32 weist eine hufeisen-förmige Form auf, sowie einen Südpol 34 und einen Nordpol 36. Zwischen den Polen 34, 36 des Dauermagneten 32 besteht ein Magnetfeld 16, das in Figur 1 durch Pfeile mit zwei Pfeilspitzen symbolisiert wird. Die Pfeile, die das Magnetfeld symbolisieren, stellen einen Teil der Magnetfeldlinien bzw. ihren Verlauf dar. Zwischen den Polen 34, 36 des Dauermagneten 32 verläuft das Magnetfeld 16 im Wesentlichen senkrecht zu dem rotierenden Werkzeug 20 der Werkzeugmaschine 10 bzw. im Wesentlichen parallel zu einer Achse (nicht dargestellt) des rotierenden Werkzeugs 20.

Durch die Drehbewegung 60 des rotierenden Werkzeugs 20 in dem Magnetfeld 16 entstehen in dem rotierenden Werkzeug 20 Wirbelströme 50, die zu einem Abbremsen des rotierenden Werkzeugs 20 der Werkzeugmaschine 10 führen. Ein geringer Anteil der beim Abbremsen des rotierenden Werkzeugs 20 freiwerdenden Energie 40 kann als Wärmeenergie abgegeben werden.

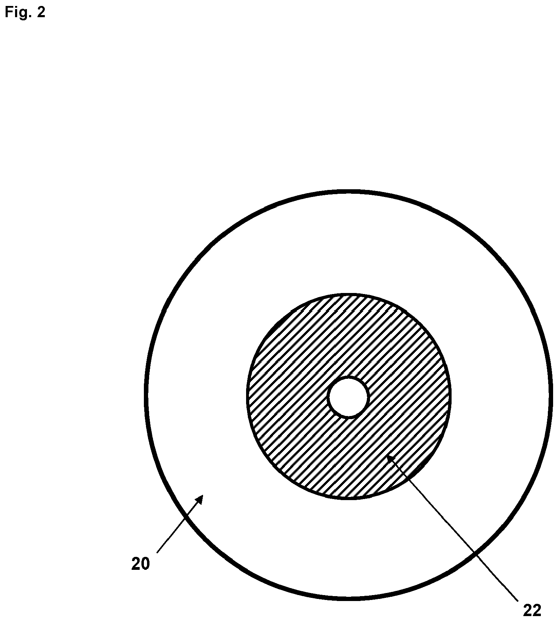

Figur 2 zeigt schematisch ein rotierendes Werkzeug 20 einer Werkzeugmaschine 10. Beispielsweise kann es sich dabei um eine Trenn- oder Schleifscheibe handeln. Das rotierende Werkzeug 20 weist einen Metall-Bestandteil 22 auf, der mit der Wirbelstrombremse 12 bzw. dem von der Wirbelstrombremse 12 erzeugten Magnetfeld 16 in dem Sinne zusammenwirkt, dass das rotierende Werkzeug 20 bei Ausführung einer Drehbewegung 60 in dem Magnetfeld 16 abgebremst wird. Diese Bremswirkung wird insbesondere durch Lorentz-Kräfte und Wirbelströme 50 hervorgerufen, die durch die Drehbewegung 60 des rotierenden Werkzeugs 20 in dem Magnetfeld 16 erzeugt werden.

Der Metall-Bestandteil 22 kann - wie in Figur 2 dargestellt - einen Grundkörper aus Metall des rotierenden Werkzeugs 20 bilden. Es ist aber auch möglich, dass der Metall-Bestandteil 22 plattenartig und/oder flach ausgebildet ist und beispielsweise an mehreren Stellen nachträglich auf eine ansonsten nicht oder nicht-ausreichend metallische Trennscheibe aufgesetzt wird. Dadurch erhält eine solche Trennscheibe 20 nachträglich die erforderlichen metallischen bzw. magnetischen Eigenschaften, um als Wirbelstromläufer in einer Wirbelstrombremse 12 zu fungieren.

Figur 3 zeigt eine Werkzeugmaschine 10, wobei das rotierende Werkzeug 20 in der oberen Hälfte der Figur durch einen gestrichelten Bogen angedeutet ist. In der oberen Hälfte der Figur 3 ist eine Seitenansicht der Werkzeugmaschine 10 abgebildet, während in der unteren Hälfte von Figur 3 eine Ansicht von oben der Werkzeugmaschine 10 dargestellt ist. Das rotierende Werkzeug 20 ist zumindest teilweise von einem Blattschutz (ohne Bezugszeichen) umgeben und dadurch teilweise verdeckt. Die in Figur 3 dargestellt Werkzeugmaschine 10 weist zwei Energieversorgungsvorrichtungen 28, die beispielsweise, wie im unteren Bereich der Figur 3 ersichtlich, nebeneinander angeordnet vorliegen können. In der oberen Hälfte der Figur 3 ist ansichtsbedingt nur eine Energieversorgungsvorrichtung 28 zu sehen. Bei der Energieversorgungsvorrichtung 28 kann es sich um eine wiederaufladbare Batterie oder um einen Akkumulator handeln.

Insbesondere zeigt Figur 3 verschiedene mögliche Anbringungsorte der Wirbelstrombremse 12. Die möglichen Anbringungsorte sind in Figur 3 mit weiß ausgefüllten Rechtecken dargestellt. Es ist im Sinne der Erfindung ganz besonders bevorzugt, dass die Wirbelstrombremse 12 im Antriebsstrang 18 der Werkzeugmaschine 10 vorliegen kann. Der Antriebsstrang 18 der Werkzeugmaschine 10 kann beispielsweise den Motor 24 oder einen Keilriemen 26 (im oberen Bereich der Figur 3 verdeckt durch die Abdeckung) umfassen. Darüber hinaus kann die Wirbelstrombremse 12 im Bereich des rotierenden Werkzeugs 20 angeordnet vorliegen. Um die entsprechenden Orte als möglichen Anbringungsort der Wirbelstrombremse 12 zu kennzeichnen, ist das Bezugszeichen 12 in Figur 3 zusammen mit dem entsprechenden Bezugszeichen an der Komponente 20, 24, 26 der Werkzeugmaschine 10 angeordnet.

### Bezugszeichenliste

- 10: Werkzeugmaschine
- 12: Wirbelstrombremse
- 14: Mittel zur Erzeugung eines Magnetfelds
- 16: Magnetfeld
- 18: Antriebsstrang
- 20: rotierendes Werkzeug
- 22: Metall-Bestandteil
- 24: Motor
- 26: Keilriemen
- 28: Energieversorgungsvorrichtung
- 30: Elektromagnet
- 32: Dauermagnet
- 34: Südpol
- 36: Nordpol
- 40: freiwerdende Energie
- 50: Wirbelströme
- 60: Drehbewegung des rotierenden Werkzeugs

## Patentansprüche

1. Werkzeugmaschine (10) mit einem rotierenden Werkzeug (20)
**gekennzeichnet dadurch, dass**
die Werkzeugmaschine (10) zur Unterstützung eines konventionellen Bremsvorgangs eine Wirbelstrombremse (12) aufweist, wobei die Wirbelstrombremse (12) ein Mittel (14) zur Erzeugung eines magnetischen Felds (16) umfasst und das rotierende Werkzeug (20) einen Metall-Bestandteil (22), so dass das rotierende Werkzeug (20) bei Bewegung durch das magnetische Feld (16) abgebremst wird.

2. Werkzeugmaschine (10) nach Anspruch 1
**gekennzeichnet dadurch, dass**
die Wirbelstrombremse (12) so ausgebildet ist, dass das magnetische Feld (16) einund ausgeschaltet und/oder regelbar eingestellt werden kann.

3. Werkzeugmaschine (10) nach Anspruch 1 oder 2
**gekennzeichnet dadurch, dass**
die Mittel (14) zur Erzeugung des magnetischen Felds (16) einen Dauermagneten (32) und/oder einen Elektromagneten (30) umfassen.

4. Werkzeugmaschine (10) nach einem der vorhergehenden Ansprüche
**gekennzeichnet dadurch, dass**
die Wirbelstrombremse (12) in einem Antriebsstrang (18) der Werkzeugmaschine (10) angeordnet vorliegt.

5. Werkzeugmaschine (10) nach einem der vorhergehenden Ansprüche
**gekennzeichnet dadurch, dass**
die Wirbelstrombremse (12) im Bereich einer Achse eines Motors (24) der Werkzeugmaschine (10), im Bereich einer Achse des rotierenden Werkzeugs (20) der Werkzeugmaschine (10) und/oder im Bereich eines Keilriemens (26) der Werkzeugmaschine (10) angeordnet vorliegt.

6. Werkzeugmaschine (10) nach einem der vorhergehenden Ansprüche
**gekennzeichnet dadurch, dass**
das magnetische Feld (16) im Wesentlichen senkrecht zu dem rotierenden Werkzeug (20) ausgebildet ist.

7. Werkzeugmaschine (10) nach einem der vorhergehenden Ansprüche
**gekennzeichnet dadurch, dass**
die Werkzeugmaschine (10) eine Energieversorgungsvorrichtung (28) aufweist.

8. Verfahren zum Bremsen eines rotierenden Werkzeugs (20) einer Werkzeugmaschine (10), **gekennzeichnet durch die folgenden Verfahrensschritte:**
a) Bereitstellung einer Werkzeugmaschine (10) nach einem der vorhergehenden Ansprüche,
b) Durchführung eines konventionellen Bremsvorgangs zum Abbremsen des rotierenden Werkzeugs (20),
c) Hinzuschalten der Wirbelstrombremse (12) zur Ergänzung des konventionellen Bremsvorgangs.

9. Bremsverfahren nach Anspruch 8
**gekennzeichnet dadurch, dass**
der konventionelle Bremsvorgang ein Rückspeisen von beim Bremsvorgang freiwerdender Energie in eine Energieversorgungsvorrichtung (28) der Werkzeugmaschine (10) umfasst, wobei beim Bremsen des rotierenden Werkzeugs (20) der Werkzeugmaschine (10) ein Anteil an Energie in die Energieversorgungsvorrichtung (28) rückgespeist wird und/oder ein Überschuss an freiwerdender Energie verwendet wird, um mittels der Wirbelstrombremse (12) ein magnetisches Feld (16) zu erzeugen und das rotierende Werkzeug (20) der Werkzeugmaschine (10) abzubremsen.

10. Bremsverfahren nach Anspruch 8 oder 9
**gekennzeichnet dadurch, dass**
bei Hinzuschalten der Wirbelstrombremse (12) ein magnetisches Feld (16) erzeugbar ist, wobei ein elektrischer Strom zur Erzeugung des magnetischen Felds (16) in Abhängigkeit von einer Versorgungspannung der Werkzeugmaschine (10) und/oder unter Verwendung einer Puls-Weiten-Modulation (PWM) regelbar ist.

11. Bremsverfahren nach einem der Ansprüche 8 bis 10
**gekennzeichnet dadurch, dass**
eine Regelung des Bremsverfahrens strombasiert und/oder drehzahlbasiert erfolgt.
